# DEMANDE DE BREVET EUROPEEN

(11) **EP 1 902 877 A1**
(43) Date de publication de la demande: **26.03.2008**
(21) Numéro de dépôt: 07116680.5
(22) Date de dépôt: 18.09.2007
(51) Int. Cl.: B60H 1/32

(54) **Procédé de gestion thermique, notamment pour le refroidissement moteur et/ou la climatisation d'un véhicule automobile et système de gestion thermique utilisant un tel procédé**

(30) Priorité: 20.09.2006 FR 0608240
(71) Demandeur: Valeo Systèmes Thermiques, 78321 Le Mesnil Saint-Denis Cedex (FR)
(72) Inventeur: Jouanny, Philippe, 78280, Guyancourt (FR); Ap, Ngy Sru, 78470, Saint Remy Les Chevreuse (FR)

(57) **Abrégé**

L'invention concerne un procédé gestion thermique, notamment pour le refroidissement moteur et/ou la climatisation d'un véhicule automobile, ledit procédé utilisant un système comportant :
- un circuit de refroidissement moteur dans lequel circule un liquide caloporteur, et
- un circuit de climatisation dans lequel circule un fluide réfrigérant, ledit circuit comportant au moins un refroidisseur de gaz (14),
le refroidisseur de gaz (14) comprenant au moins deux étages successifs, chaque étage permettant un échange thermique entre le liquide caloporteur et le fluide réfrigérant. Ce procédé propose que l'on réduise et/ou interrompe sélectivement la circulation du liquide caloporteur dans le premier et/ou le deuxième étage, de manière à accroître corrélativement la quantité de chaleur cédée par le fluide réfrigérant au liquide caloporteur circulant dans l'autre étage.

L'invention concerne aussi un système de gestion thermique utilisant un tel procédé.

## Description

L'invention concerne un procédé de gestion thermique, notamment pour le refroidissement moteur et/ou la climatisation d'un véhicule automobile et un système de gestion thermique utilisant un tel procédé.

Elle concerne plus particulièrement les procédés de gestion thermique utilisant un système de gestion thermique comportant des circuits de climatisation mettant en oeuvre un fluide réfrigérant tel que le dioxyde de carbone (CO₂) fonctionnant à l'état supercritique, c'est-à-dire où le fluide reste la plupart du temps à l'état gazeux dans le circuit de climatisation.

Un tel circuit peut notamment comprendre un compresseur, un refroidisseur de gaz, un échangeur de chaleur interne, un détendeur, un évaporateur et un accumulateur. Le refroidisseur de gaz, qui remplace le condenseur des circuits de climatisation classiques, est agencé pour refroidir le fluide réfrigérant gazeux par échange thermique soit avec l'air ambiant (échangeur de chaleur du type air/gaz) soit avec le liquide de refroidissement du moteur ou liquide caloporteur (échangeur de chaleur du type eau/gaz, connu également sous la dénomination de *Water*/*Gas Cooler* ou "WGC").

C'est aux circuits comprenant ce dernier type d'échangeur que se rapporte l'invention.

Un circuit de climatisation dans lequel circule un fluide réfrigérant et qui comporte au moins un refroidisseur de gaz comprenant au moins deux étages successifs, et où chaque étage permet un échange thermique entre un liquide caloporteur (circulant dans un circuit de refroidissement moteur ) et le fluide réfrigérant est décrit par exemple dans le FR-A-2 875 743 au nom de Valeo Systèmes Thermiques.

Dans ce document le fluide réfrigérant est un réfrigérant gazeux tel que le CO₂.

Le point de départ de l'invention réside dans la constatation de ce que l'utilisation d'un échangeur eau/gaz dans de tels circuits ne permet pas d'utiliser tout le potentiel de l'échangeur dans un certain nombre de cas de fonctionnements, en particulier lorsque le moteur est froid. Au surplus, même lorsque le moteur est chaud, du fait de l'amélioration des rendements des moteurs à combustion interne, en particulier les moteurs Diesel, il apparaît dans certaines conditions un déficit d'énergie pour satisfaire les besoins de chauffage de l'habitacle, qui pénaliserait le confort du conducteur et des passagers. Pour compenser ce déficit, des sources supplémentaires de chauffage sont utilisées telles que brûleurs, résistances électriques, etc., mais ces moyens supplémentaires impliquent bien entendu un encombrement, un poids et un surcoût importants.

Le but de l'invention est de résoudre ces problèmes, en proposant une nouvelle configuration du circuit de climatisation qui, dans un mode particulier, permette d'optimiser le rendement de l'échange thermique entre le fluide réfrigérant et le liquide de refroidissement du moteur, afin de répondre à des besoins de chauffage accrus tels que :
- montée en température plus rapide du moteur lorsque celui-ci est froid, et/ou
- chauffage additionnel de l'habitacle, notamment par temps froid, et/ou
- réchauffage de l'air d'admission du moteur, en particulier pour les moteurs pourvus d'un dispositif de suralimentation.

Pour résoudre les besoins de chauffage additionnel dans ces différents cas, l'invention propose d'utiliser comme source de chaleur la boucle de climatisation, en réchauffant le liquide caloporteur du circuit de refroidissement moteur à l'aide du fluide réfrigérant du circuit de climatisation, ce fluide étant lui-même chauffé par son passage dans le compresseur.

On verra plus loin que la solution apportée par l'invention peut être mise en oeuvre sans modifier le circuit dans lequel circule le fluide réfrigérant, notamment sans addition de vanne ou organe analogue.

Cet avantage est particulièrement précieux dans le cas des circuits de climatisation utilisant comme fluide réfrigérant le dioxyde de carbone, car ces circuits sont difficiles à réaliser et à modifier compte tenu des pressions de fluide qui peuvent atteindre en fonctionnement normal des valeurs, jusqu'à 150 bars, très supérieures aux pressions habituellement rencontrées dans les circuits de climatisation classiques utilisant des fluides à changement de phase tels que les composés fluorés.

Ainsi, l'invention propose un procédé gestion thermique, notamment pour le refroidissement moteur et/ou la climatisation d'un véhicule automobile, qui utilise un système comportant :
- un circuit de refroidissement moteur dans lequel circule un liquide caloporteur, et
- un circuit de climatisation dans lequel circule un fluide réfrigérant et comportant au moins un refroidisseur de gaz.

En outre, selon l'invention, le refroidisseur de gaz comprend au moins deux étages successifs, chaque étage permettant un échange thermique entre le liquide caloporteur et le fluide réfrigérant.

De façon caractéristique de l'invention, on réduit et/ou interrompt sélectivement la circulation du liquide caloporteur dans le premier et/ou le deuxième étage, de manière à accroître corrélativement la quantité de chaleur cédée par le fluide réfrigérant au liquide caloporteur circulant dans l'autre étage.

Ainsi, en fonction des conditions rencontrées (température moteur, température extérieure, besoin de chauffage de l'habitacle, etc.), on utilise ou non la chaleur dégagée par la compression du fluide réfrigérant dans le circuit de climatisation pour augmenter la température du liquide caloporteur. Le surcroît de chaleur ainsi transféré à ce dernier est récupéré pour augmenter la température fournie au moteur (condition de moteur froid ou de besoin important de chauffage de l'habitacle) et/ou pour faire circuler le liquide ainsi réchauffé dans une boucle de circuit incluant un réchauffeur d'air de suralimentation, afin d'augmenter la température de l'air d'admission délivré au moteur.

Pour cela, le système de gestion thermique conforme à l'invention comprend en outre des moyens de régulation aptes à réduire et/ou interrompre sélectivement la circulation du liquide caloporteur dans le premier et/ou le deuxième étage, de manière à accroître corrélativement la quantité de chaleur cédée par le fluide réfrigérant au liquide caloporteur circulant dans l'autre étage.

Des modes de réalisation particuliers de l'invention proposent que :
- dans le système de gestion thermique conforme à l'invention, un premier étage comprend une première boucle avec un échangeur de type liquide/gaz haute température et, selon le procédé conforme à l'invention, on alimente l'échangeur de type liquide/gaz haute température côté chaud par le fluide réfrigérant à refroidir en provenance d'un compresseur, et côté froid par le liquide caloporteur du circuit de refroidissement moteur entraîné dans cette première boucle par une pompe de circulation moteur.
- dans le système de gestion thermique conforme à l'invention, un deuxième étage comprend une deuxième boucle avec un échangeur de type liquide/gaz basse température et un radiateur de refroidissement basse température, et, selon le procédé conforme à l'invention, on alimente l'échangeur basse température côté chaud par le fluide réfrigérant à refroidir en provenance de l'échangeur haute température, et côté froid par du liquide caloporteur circulant dans le radiateur de refroidissement basse température.
- on entraîne le liquide caloporteur dans la deuxième boucle par une seconde pompe de circulation propre du système de gestion thermique conforme à l'invention, et on commande ledit débit de ladite seconde pompe de circulation propre pour réduire et/ou interrompre le débit de la pompe de circulation propre de façon à diminuer l'échange thermique dans l'échangeur basse température.
- dans le système de gestion thermique conforme à l'invention, le refroidisseur de gaz comprend un troisième étage avec un échangeur de type liquide caloporteur/fluide réfrigérant très basse température, et selon le procédé conforme à l'invention, on réduit et/ou interrompt sélectivement la circulation du liquide caloporteur dans le troisième étage.
- le troisième étage du système de gestion thermique comprend une troisième boucle avec l'échangeur très basse température et selon le procédé conforme à l'invention, on alimente l'échangeur très basse température côté chaud par le fluide réfrigérant à refroidir en provenance de l'échangeur basse température, et côté froid par du liquide caloporteur circulant dans un radiateur de refroidissement très basse température.
- Quand la deuxième et la troisième boucles sont des boucles indépendantes, on entraîne le liquide caloporteur dans la troisième boucle par une troisième pompe de circulation auxiliaire propre du système de gestion thermique, et on commande le débit de la pompe de circulation auxiliaire propre pour réduire et/ou interrompre le débit de la pompe de circulation propre de façon à diminuer l'échange thermique dans l'échangeur très basse température.
- Quand la deuxième et la troisième boucles sont des boucles interdépendantes, on entraîne le liquide caloporteur à la fois dans la deuxième et la troisième boucles par une pompe de circulation commune du système de gestion thermique, et on commande le débit de la troisième pompe de circulation commune pour réduire et/ou interrompre le débit de la pompe de circulation commune de façon à diminuer l'échange thermique dans les échangeurs basse température et très basse température.
- dans le système de gestion thermique conforme à l'invention, la deuxième boucle inclut un réchauffeur d'air de suralimentation.
- dans le système de gestion thermique conforme à l'invention, on dispose le réchauffeur d'air de suralimentation en série avec le radiateur de refroidissement basse température.
- on réduit le débit du liquide caloporteur dans l'échangeur haute température de manière à diminuer l'échange thermique dans l'échangeur haute température et, corrélativement, accroître la quantité de chaleur cédée par le liquide caloporteur au réchauffeur d'air de suralimentation dans la deuxième boucle.
- on accroît dans la deuxième boucle le débit relatif du liquide caloporteur traversant le réchauffeur d'air de suralimentation par rapport à celui du liquide traversant le radiateur de refroidissement basse température.
- on accroît dans la première boucle le débit relatif du liquide caloporteur traversant le reste de la boucle par rapport à celui du liquide caloporteur traversant un radiateur à haute température.

On va maintenant décrire un exemple de mise en oeuvre du procédé de gestion thermique et du système de gestion thermique selon l'invention en référence aux dessins annexés où les mêmes références numériques désignent d'une figure à l'autre des éléments identiques ou fonctionnellement semblables.

La figure 1 est un schéma représentant un circuit de climatisation de véhicule automobile, parcouru par un fluide réfrigérant fonctionnant à l'état supercritique.

La figure 2 est un diagramme enthalpique du fluide réfrigérant utilisé dans le circuit de la figure 1.

La figure 3 illustre plus en détail l'implantation des différents éléments du circuit de refroidissement moteur et de climatisation à échangeur eau/gaz du schéma de la figure 1, avec la boucle de refroidissement moteur et les différentes boucles de climatisation et leurs éléments associés.

La figure 4 illustre une variante avantageuse du circuit de refroidissement moteur et de climatisation à échangeur eau/gaz selon la présente invention.

La figure 5 illustre une seconde forme de réalisation du circuit de refroidissement moteur et de climatisation à échangeur eau/gaz selon la présente invention.

La figure 6 illustre une variante du circuit représenté à la figure 5.

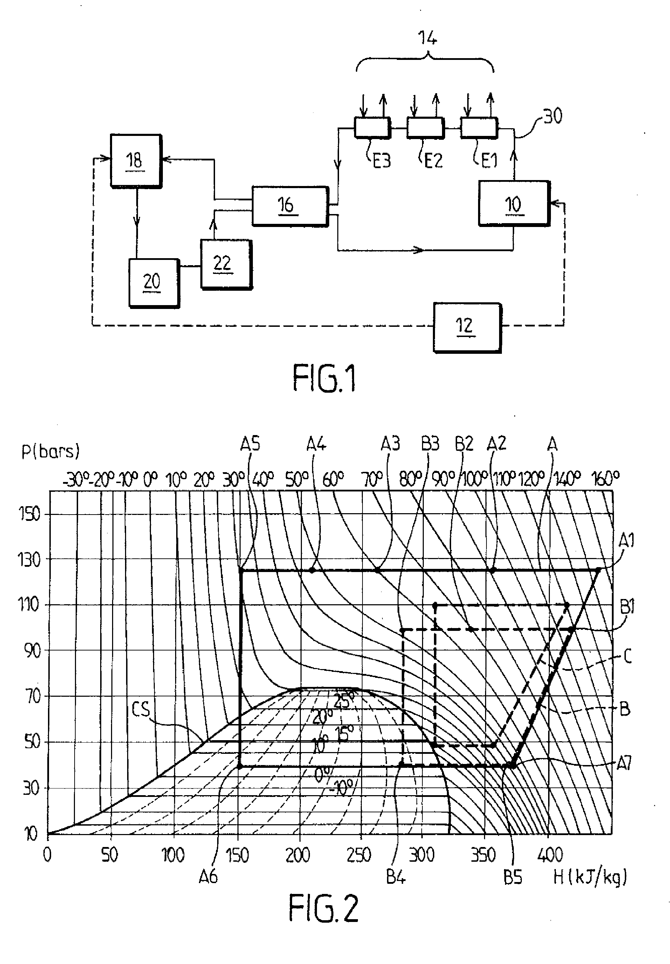

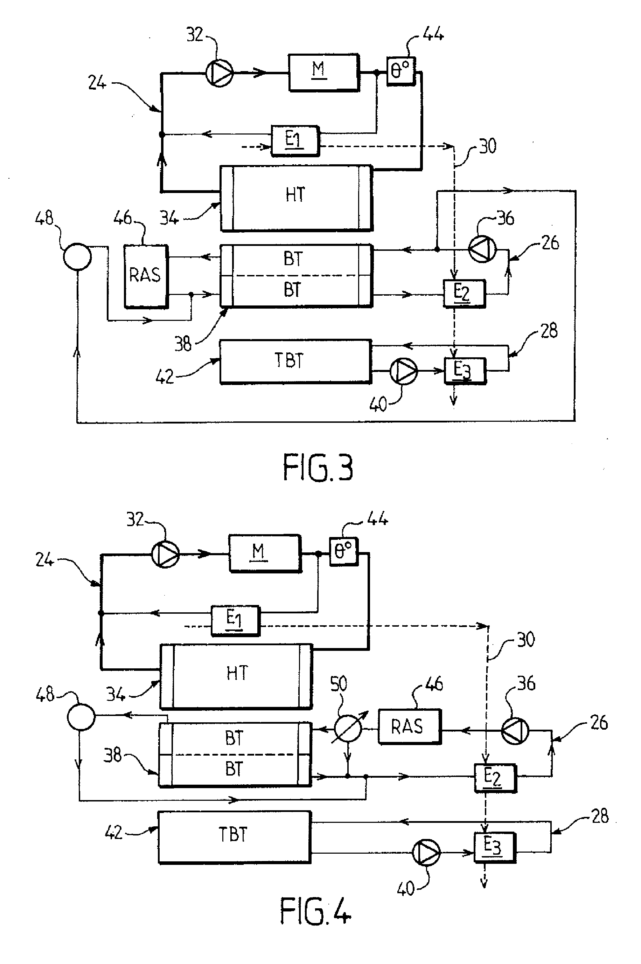

Les figures 1 et 3 illustrent un circuit de climatisation de véhicule automobile utilisant un fluide réfrigérant fonctionnant à l'état supercritique tel que le CO₂, où la température du fluide réfrigérant est abaissée par échange thermique avec le liquide de refroidissement du moteur.

Le circuit comprend un compresseur 10, par exemple un compresseur à contrôle externe piloté par une électronique de commande 12. Le fluide réfrigérant comprimé traverse ensuite un refroidisseur de gaz 14 comprenant un ou plusieurs échangeurs successifs, à savoir trois échangeurs E1, E2 et E3 montés en série dans l'exemple représenté. À la sortie du refroidisseur 14, le fluide traverse un échangeur interne 16, puis est détendu dans un détendeur 18, par exemple une vanne de détente pilotée également par l'électronique de commande 12. Le fluide ainsi détendu est conduit vers un échangeur 20 assurant une fonction d'évaporateur, puis vers un accumulateur 22 et l'échangeur interne 16, avant d'être recyclé vers le compresseur 10.

Le refroidisseur de gaz 14 comprend par exemple, comme illustré figure 1, une série de trois échangeurs E1, E2, E3 fonctionnant respectivement à haute température, basse température et très basse température, ces trois échangeurs permettant de définir trois étages de refroidissement.

Le premier échangeur E1 définissant 1e premier étage de refroidissement est un échangeur eau/gaz utilisant comme source froide le liquide de refroidissement moteur, généralement de l'eau additionnée d'un antigel (eau glycolée) ou liquide analogue. L'échangeur basse température E2 définissant le second étage de refroidissement utilise également comme source froide le liquide de refroidissement du moteur, via une boucle distincte de la boucle alimentant l'échangeur E1. L'échangeur très basse température E3 définissant le troisième étage de refroidissement peut utiliser comme source froide également le liquide de refroidissement du moteur, via une boucle distincte de la boucle alimentant l'échangeur E1, ou opérer par contact avec de l'air ambiant prélevé à l'extérieur du véhicule ; dans des formes de réalisation simplifiées, le troisième étage E3 du refroidisseur peut être omis.

La haute température (la "température" en question étant entendue comme la température du liquide caloporteur circulant dans l'échangeur eau/gaz) est habituellement de l'ordre de 80 à 100°C (typiquement 90°C), la basse température de l'ordre de l'ordre 50 à 70°C (typiquement 60°C), et la très basse température de l'ordre de 30 à 60°C (typiquement 50°C) dans le cas d'un échangeur eau/gaz utilisant le liquide de refroidissement moteur, ou une température dépendant de l'air ambiant dans le cas d'un échangeur air/gaz.

Sur la figure 2, on a représenté le diagramme d'état du fluide réfrigérant pour les différentes phases de fonctionnement, avec en abscisse l'enthalpie H en en ordonnée la pression P.

Le diagramme référencé A correspond au cycle de fonctionnement d'un circuit de climatisation à CO₂ classique. On notera que ce diagramme d'état coupe la courbe de saturation CS du fluide réfrigérant, celui-ci restant toutefois la plupart du temps à l'état gazeux (fonctionnement à l'état supercritique). Le diagramme A présente la forme générale d'un trapèze, où :
- le segment A₁A₅ correspond au refroidissement à pression constante, réparti entre l'échangeur haute température E1 (A₁A₂), l'échangeur basse température E2 (A₂A₃), l'échangeur très basse température E3 (A₃A₄) et l'échangeur thermique interne 16 (A₄A₅) ;
- le segment A₅A₆ correspond à la détente adiabatique du gaz à enthalpie constante, dans le détendeur 18 ;
- le segment A₆A₇ correspond à l'évaporation, à pression constante, dans l'évaporateur 20 ; et
- le segment A₇A₁ correspond à la compression par le compresseur 10.

On se réfère maintenant à la figure 3, qui décrit plus précisément la configuration des différents éléments des deux circuits de refroidissement et de climatisation qui peuvent être utilisés dans le cadre de la mise en oeuvre du procédé de gestion thermique selon l'invention.

Le premier échangeur E1 du refroidisseur de gaz fait partie d'une boucle 24 de refroidissement du moteur M, dite boucle à haute température (HT). On alimente l'échangeur de type liquide/gaz haute température E1 côté chaud par le fluide réfrigérant à refroidir en provenance d'un compresseur 10, et côté froid par le liquide caloporteur du circuit de refroidissement moteur entraîné dans cette première boucle par une pompe de circulation moteur 44.

Le deuxième échangeur E2 fait partie d'une boucle de refroidissement 26 dite boucle à basse température (BT), distincte de la boucle de refroidissement du moteur bien qu'utilisant le même liquide caloporteur. On alimente l'échangeur basse température (E2) côté chaud par le fluide réfrigérant à refroidir en provenance de l'échangeur haute température (E1), et côté froid par du liquide caloporteur circulant dans le radiateur de refroidissement basse température (38).

Le troisième échangeur E3 fait partie d'une boucle de refroidissement 28, dite boucle à très basse température (TBT), qui est elle aussi distincte de la boucle de refroidissement du moteur bien qu'utilisant le même liquide caloporteur. On alimente l'échangeur très basse température côté chaud par le fluide réfrigérant à refroidir en provenance de l'échangeur basse température (E2), et côté froid par du liquide caloporteur circulant dans un radiateur de refroidissement très basse température (42).

Dans une variante simplifiée (non représentée), le troisième échangeur de chaleur E3 peut être omis, le fluide réfrigérant étant alors simplement refroidi par deux échangeurs parcourus tous deux par le liquide de refroidissement du moteur.

Dans tous les cas, le fluide réfrigérant circule dans une conduite 30 du circuit illustré figure 1, qui est une conduite de gaz haute pression (c'est-à-dire capable de supporter des pressions typiques de l'ordre de 450 bars), traversant successivement les trois échangeurs thermiques E1, E2 et E3 dans le sens indiqué par les flèches.

Le liquide de refroidissement du moteur M, ci-après désigné "liquide caloporteur", qui est typiquement de l'eau additionnée d'un antigel, est mis en mouvement dans la boucle 24 par une pompe de circulation 32, et il traverse également un radiateur de refroidissement moteur 34.

Le deuxième échangeur E2 fait partie de la boucle de refroidissement basse température 26, qui est indépendante de la boucle 24 de refroidissement du moteur, mais qui est également parcourue par le liquide caloporteur. La boucle 26 comporte sa propre pompe de circulation 36 dite deuxième pompe de circulation, ainsi qu'un radiateur de refroidissement basse température 38.

Le troisième échangeur E3 fait partie de la boucle de refroidissement très basse température 28 qui est indépendante de la boucle de refroidissement moteur 24 et (tout au moins dans le mode de réalisation illustré figure 3) également indépendante de la boucle basse température 26. La boucle 28 comporte également sa propre pompe de circulation auxiliaire 40 dite troisième pompe, et elle comprend un radiateur de refroidissement 42 fonctionnant à très basse température.

Le circuit de refroidissement moteur comprend également un thermostat 44 contrôlant le débit du liquide caloporteur dans le radiateur 34, par exemple au moyen d'une soupape contrôlée en température interdisant ou réduisant le passage du liquide caloporteur dans le radiateur 34 tant que le moteur n'a pas atteint sa pleine température de fonctionnement. Ce thermostat 44 permet ne pas pénaliser la montée en température du moteur au démarrage ; en revanche, il n'empêche pas le passage du liquide caloporteur dans l'échangeur E1, qui reste donc parcouru par le liquide caloporteur quel que soit l'état du thermostat 44.

L'équipement de refroidissement et de climatisation ci-dessus peut également comprendre un réchauffeur d'air de suralimentation ou "RAS" 46, dispositif également connu sous la dénomination de *Water*/*Charged-Air Cooler* ou "WCAC", qui sert généralement au refroidissement d'air des dispositifs de suralimentation moteur, mais qui serait ici utilisé en tant qu'échangeur thermique pour céder de la chaleur à l'air d'admission moteur.

La boucle basse température 26 comprend enfin un réservoir d'expansion 48 permettant d'absorber les variations de volume du liquide en fonction de la température.

La configuration que l'on vient de décrire, en elle-même connue, ne permet pas d'utiliser tout le potentiel des échangeurs thermiques E1 et/ou E2 dans un certain nombre de cas de fonctionnement, notamment :
- lorsque le moteur est froid ;
- par temps froid, lorsqu'il existe des besoins importants de réchauffage de l'habitacle ;
- par temps froid, quand il est nécessaire de réchauffer l'air d'admission pour un meilleur fonctionnement du moteur.

Ainsi pour utiliser tout le potentiel des échangeurs thermiques E1 et/ou E2, l'invention propose un procédé de gestion où on réduit et/ou interrompt sélectivement la circulation du liquide caloporteur dans le premier et/ou le deuxième étage (ou autrement dit dans les échangeurs thermiques E1 et/ou E2), de manière à accroître corrélativement la quantité de chaleur cédée par le fluide réfrigérant au liquide caloporteur circulant dans l'autre étage.

Dans une première forme de mise en oeuvre de l'invention, le circuit connu de la figure 3 reste structurellement configuré comme illustré, mais son fonctionnement est modifié lorsque l'on souhaite répondre à des besoins de chauffage additionnels par le moteur, c'est-à-dire une augmentation plus rapide de la température moteur et/ou un besoin de chauffage important de l'habitacle.

À cet effet, les boucles basse température 26 et très basse température 28 sont rendues inactives. Pour cela on interrompt sélectivement la circulation du liquide caloporteur dans les radiateurs respectifs basse température 38 et très basse température 42.

Un mode de réalisation particulier non représenté propose qu'on ne réduise et/ou interrompe sélectivement la circulation du liquide caloporteur que dans le troisième étage.

En arrêtant la circulation du liquide caloporteur dans ces boucles, on bloque l'échange thermique dans les échangeurs E2 et E3. L'échange thermique dans les échangeurs E2 et E3 se réduit à la convection naturelle du côté du liquide caloporteur, et peut être considéré comme négligeable dans le bilan thermique global du système.

En revanche, la circulation du liquide caloporteur reste assurée dans l'échangeur E1, par l'intermédiaire de la pompe de circulation moteur 32 (dont sont indépendantes les deuxième et troisième pompes 36 et 40 des boucles basse température 26 et très basse température 28), qui continue à fonctionner.

Cette modification va avoir pour effet de modifier le diagramme d'état du fluide réfrigérant qui ne sera plus refroidi dans les échangeurs E2 et E3 en raison de l'arrêt des deuxième et troisième pompes de circulation 36 et 40.

On commande le débit de la deuxième pompe de circulation propre 36 pour réduire et/ou interrompre le débit de la deuxième pompe de circulation propre 36 de façon à diminuer l'échange thermique dans l'échangeur basse température.

Le diagramme d'état devient celui illustré en B ou C sur la figure 2. Ces deux diagrammes correspondent respectivement à une détente à 40 bars ou à 50 bars, valeur qu'il est possible d'ajuster par un réglage approprié du détendeur contrôlé 18.

Le fluide réfrigérant n'étant plus refroidi que par l'échangeur E1 (segment B₁B₂, le segment B₂B₃ correspondant au travail de l'échangeur interne 16), il ne produit pas assez de froid. Le mode "climatisation" se transforme ainsi en mode "chauffage", avec transfert de chaleur depuis le fluide réfrigérant vers le liquide caloporteur, par l'intermédiaire de l'échangeur haute température E1.

Dans ce mode de fonctionnement, l'échange thermique se fait essentiellement par l'échangeur E1, qui refroidit le fluide réfrigérant et chauffe l'eau du moteur. En d'autres termes, le travail du compresseur du circuit de climatisation sert à chauffer le moteur via l'échangeur E1.

En pratique, même après la détente dans l'évaporateur 20, la température du fluide réfrigérant reste positive (de l'ordre de +5°C), ce qui permet de préchauffer l'air ambiant lorsque la température extérieure est très basse, par exemple une température extérieure de l'ordre de -20°C. Cet air préchauffé est envoyé vers le radiateur (non représenté) de chauffage de l'habitacle du véhicule pour atteindre la température désirée dans l'habitacle.

Le mode de réalisation que l'on vient d'exposer se révèle particulièrement avantageux, pour plusieurs raisons :
- la même boucle de climatisation peut être inversée pour fonctionner en mode "chauffage" de l'habitacle, ceci simplement par gestion de l'échange thermique dans les échangeurs E2 et E3 sans modification du circuit de fluide réfrigérant tel qu'il est configuré en mode "climatisation";
- aucun composant additionnel tel qu'électrovanne, vanne, capteur, etc. n'est nécessaire sur le circuit du fluide réfrigérant ;
- la régulation peut être gérée de manière très simple, car il suffit de couper l'alimentation des deuxième et troisième pompes 36 et 40 (ou de la deuxième pompe 36 si l'équipement ne comporte pas d'étage très basse température) pour obtenir le réchauffage additionnel voulu.

La figure 4 illustre un mode de réalisation de l'invention permettant d'assurer en outre un réchauffage de l'air d'admission du moteur.

En effet, dans certaines conditions d'utilisation d'un véhicule automobile, son moteur, et plus particulièrement le système de dépollution du moteur, peut être plus efficace en utilisant un air d'admission plus chaud (utilisation à faible charge par temps froid).

Pour cela, la configuration illustrée figure 4 prévoit un organe de régulation 50, tel qu'une vanne pilotée en température, permettant de court-circuiter sélectivement l'entrée et la sortie du radiateur de refroidissement basse température 38 pour forcer le liquide caloporteur de la boucle basse température 26 à circuler dans le refroidisseur d'air de suralimentation 46, monté en série dans la boucle entre le radiateur 38 et l'échangeur E2. La deuxième pompe 36, qui dans ce cas reste en fonctionnement, assure la circulation du liquide caloporteur totalement ou partiellement dans le réchauffeur d'air de suralimentation 46 au lieu de traverser le radiateur de refroidissement 38. Le fluide réfrigérant circulant dans l'échangeur E2 pourra alors céder une partie de sa chaleur au liquide caloporteur circulant dans la boucle 26, donc à l'air d'admission du moteur via le réchauffeur 46.

Le fonctionnement de l'organe de régulation 50 peut être progressif (thermostat ou vanne proportionnelle), ou bien brusque (vanne du type "tout ou rien"). La commande de cet organe peut être opérée par le calculateur de bord du véhicule en fonction des signaux délivrés par un ou plusieurs capteurs ou sondes externes.

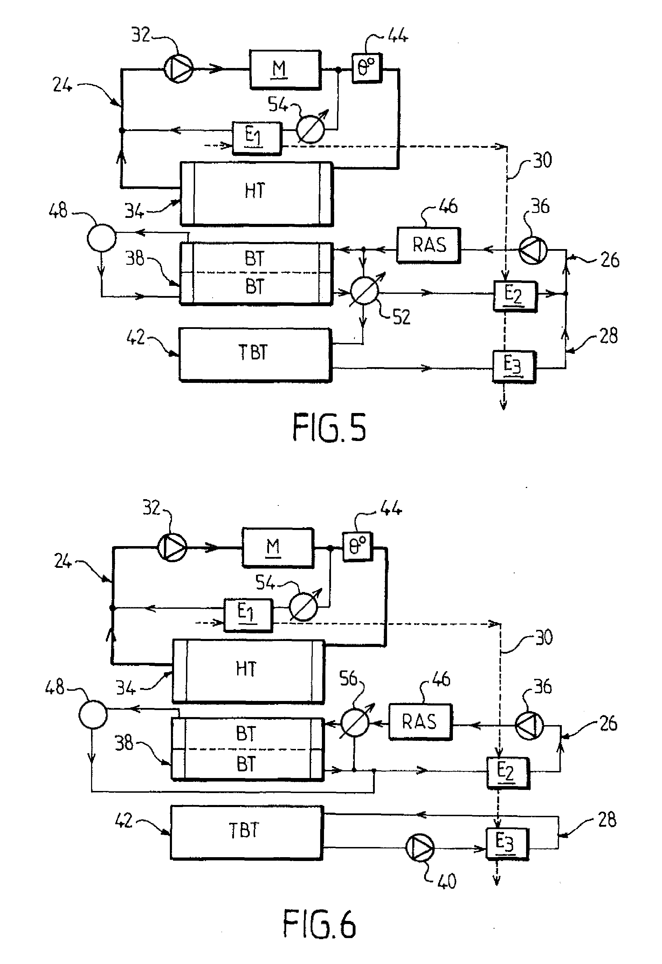

Les figures 5 et 6 illustrent une seconde forme de mise en oeuvre de l'invention, qui peut être envisagée aussi bien en variante qu'en complément de celle que l'on vient de décrire.

Pour augmenter l'efficacité du système, notamment la quantité de chaleur transférée au réchauffeur d'air de suralimentation 46, un moyen de régulation additionnel 54 permet de faire varier le débit du liquide caloporteur traversant l'échangeur haute température E1.

Dans une première utilisation du procédé, on pourra accroître dans la première boucle le débit relatif du liquide caloporteur traversant le reste de la boucle par rapport à celui du liquide caloporteur traversant un radiateur à haute température 34.

Dans une seconde utilisation du procédé, on pourra réduire le débit du liquide caloporteur dans l'échangeur haute température E1 de manière à diminuer l'échange thermique dans l'échangeur haute température et, corrélativement, accroître la quantité de chaleur cédée par le liquide caloporteur au réchauffeur d'air de suralimentation 46 dans la deuxième boucle.

Ou autrement dit, ceci aura pour effet de réduire, voire d'annuler, le débit dans cet échangeur, avec pour résultat d'accroître encore le transfert thermique dans l'échangeur basse température E2 et, par voie de conséquence, la quantité de chaleur cédée à l'air d'admission moteur par le réchauffeur d'air de suralimentation 46.

Dans la configuration illustrée figure 5, le débit du liquide caloporteur dans la boucle basse température 26 est ajusté par un organe de régulation 52 disposé dans cette boucle entre le radiateur de refroidissement basse température 38 et l'échangeur E2. Le réchauffeur d'air de suralimentation 46 est disposé en série avec le radiateur basse température 38.

Dans la configuration illustrée, les deux boucles basse température 26 et très basse température 28 sont interdépendantes : le liquide caloporteur est entraîné par une unique pompe 36 dite pompe commune, et les entrées respectives des radiateurs de refroidissement basse température 38 et très basse température 42 sont reliés en parallèle. Le liquide caloporteur entraîné par la pompe commune 36 traverse ainsi le réchauffeur d'air de suralimentation 46, puis est dirigé vers les deux radiateurs de refroidissement basse température 38 et très basse température 42. En fonction de la position de la vanne de régulation 52, le débit respectif dans ces deux radiateurs sera modifié, et corrélativement le débit dans les échangeurs associés respectifs E2 et E3, permettant ainsi d'ajuster le transfert thermique pour le réchauffage de l'air d'admission moteur. Il est ainsi possible de pouvoir accroître dans la deuxième boucle le débit relatif du liquide caloporteur traversant le réchauffeur d'air de suralimentation 46 par rapport à celui du liquide traversant le radiateur de refroidissement basse température 38.

Dans ce mode de réalisation, on peut aussi entraîner le liquide caloporteur à la fois dans la deuxième et la troisième boucles par une pompe de circulation commune 36 et on commande de la pompe de circulation commune 36 pour réduire et/ou interrompre le débit de la pompe de circulation commune de façon à diminuer l'échange thermique dans les échangeurs basse température et très basse température E2 et E3.

Dans la configuration illustrée figure 6, les deux boucles 26 et 28 sont indépendantes (comme dans les configurations des figures 3 et 4), et l'organe de régulation 56 de la boucle basse température 26 assure, en tant que de besoin, la mise en court-circuit du radiateur basse température 38.

Dans ce mode de réalisation, on entraîne le liquide caloporteur dans la troisième boucle par une troisième pompe de circulation auxiliaire propre 40, et on commande le débit de la troisième pompe de circulation auxiliaire propre 40 pour réduire et/ou interrompre le débit de la troisième pompe de circulation propre de façon à diminuer l'échange thermique dans l'échangeur très basse température.

Cette configuration est à rapprocher de celle illustrée figure 4, à la différence qu'il est ici possible d'augmenter encore le transfert thermique vers le réchauffeur d'air de suralimentation 46, en réduisant le transfert thermique dans l'échangeur haute température E1 au moyen de l'organe de régulation 54 pour augmenter corrélativement le transfert thermique dans l'échangeur E2.

## Revendications

1. Procédé gestion thermique, notamment pour le refroidissement moteur et/ou la climatisation d'un véhicule automobile, ledit procédé utilisant un système de gestion thermique comportant :
- un circuit de refroidissement moteur dans lequel circule un liquide caloporteur, et
- un circuit de climatisation dans lequel circule un fluide réfrigérant, ledit circuit comportant au moins un refroidisseur de gaz (14),
le refroidisseur de gaz (14) comprenant au moins deux étages successifs, chaque étage permettant un échange thermique entre le liquide caloporteur et le fluide réfrigérant,
procédé **caractérisé en ce que** l'on réduit et/ou interrompt sélectivement la circulation du liquide caloporteur dans le premier et/ou le deuxième étage, de manière à accroître corrélativement la quantité de chaleur cédée par le fluide réfrigérant au liquide caloporteur circulant dans l'autre étage.

2. Procédé gestion thermique selon la revendication 1, **caractérisé en ce que**, dans ledit système, un premier étage comprend une première boucle (24) avec un échangeur de type liquide/gaz haute température (E1) et **en ce qu'**on alimente l'échangeur de type liquide/gaz haute température (E1) côté chaud par le fluide réfrigérant à refroidir en provenance d'un compresseur (10), et côté froid par le liquide caloporteur du circuit de refroidissement moteur entraîné dans cette première boucle par une pompe de circulation moteur (44).

3. Procédé gestion thermique selon la revendication 2, **caractérisé en ce que**, dans ledit système, un deuxième étage comprend une deuxième boucle (26) avec un échangeur de type liquide/gaz basse température (E2) et un radiateur de refroidissement basse température (38), et **en ce qu'**on alimente l'échangeur basse température (E2) côté chaud par le fluide réfrigérant à refroidir en provenance de l'échangeur haute température (E1), et côté froid par du liquide caloporteur circulant dans le radiateur de refroidissement basse température (38).

4. Procédé gestion thermique selon la revendication 3, **caractérisé en ce qu'**on entraîne le liquide caloporteur dans la deuxième boucle (26) par une deuxième pompe de circulation propre (36), et **en ce qu'**on commande le débit de ladite deuxième pompe de circulation propre (36) pour réduire et/ou interrompre le débit de la deuxième pompe de circulation propre (36) de façon à diminuer l'échange thermique dans l'échangeur basse température.

5. Procédé gestion thermique selon l'une des revendications 1 à 4, **caractérisé en ce que**, dans ledit système, le refroidisseur de gaz comprend un troisième étage (28) avec un échangeur de type liquide caloporteur/fluide réfrigérant très basse température (E3), et **en ce qu'**on réduit et/ou interrompt sélectivement la circulation du liquide caloporteur dans le troisième étage.

6. Procédé gestion thermique selon la revendication 5, **caractérisé en ce que** le troisième étage comprend une troisième boucle avec l'échangeur très basse température (E3) et **en ce qu'**on alimente l'échangeur très basse température côté chaud par le fluide réfrigérant à refroidir en provenance de l'échangeur basse température (E2), et côté froid par du liquide caloporteur circulant dans un radiateur de refroidissement très basse température (42).

7. Procédé gestion thermique selon les revendications 3 et 6 prises en combinaison, **caractérisé en ce que** la deuxième et la troisième boucles (26, 28) étant des boucles indépendantes,
- on entraîne le liquide caloporteur dans la troisième boucle par une troisième pompe de circulation auxiliaire propre (40), et
- on commande le débit de ladite pompe de circulation auxiliaire propre (40), pour réduire et/ou interrompre le débit de la troisième pompe de circulation propre (40) de façon à diminuer l'échange thermique dans l'échangeur très basse température.

8. Procédé gestion thermique selon les revendications 3 et 6 prises en combinaison, **caractérisé en ce que** la deuxième et la troisième boucles (26, 28) étant des boucles interdépendantes,
- on entraîne le liquide caloporteur à la fois dans la deuxième et la troisième boucles par une pompe de circulation commune (36), et
- on commande le débit de ladite pompe de circulation commune (36), pour réduire et/ou interrompre le débit de ladite pompe de circulation commune (36) de façon à diminuer l'échange thermique dans les échangeurs basse température et très basse température.

9. Procédé gestion thermique selon la revendication 3, **caractérisé en ce que**, dans ledit système, la deuxième boucle inclut un réchauffeur d'air de suralimentation (46).

10. Procédé gestion thermique selon la revendication 9, **caractérisé en ce que**, dans ledit système, on dispose le réchauffeur d'air de suralimentation (46) en série avec le radiateur de refroidissement basse température (38).

11. Procédé gestion thermique selon l'une des revendication 9 ou 10, **caractérisé en ce que** l'on réduit le débit du liquide caloporteur dans l'échangeur haute température (E1) de manière à diminuer l'échange thermique dans l'échangeur haute température et, corrélativement, accroître la quantité de chaleur cédée par le liquide caloporteur au réchauffeur d'air de suralimentation dans la deuxième boucle.

12. Procédé gestion thermique selon l'une des revendication 9 ou 10, **caractérisé en ce que** l'on accroît dans la deuxième boucle le débit relatif du liquide caloporteur traversant le réchauffeur d'air de suralimentation (46) par rapport à celui du liquide traversant le radiateur de refroidissement basse température (38).

13. Procédé gestion thermique selon l'une des revendications 2 à 4, ou selon l'une des revendications 6 à 12, ou selon la revendication 5 dans son rattachement à l'une des revendications 2 à 4, **caractérisé en ce que** l'on accroît dans la première boucle le débit relatif du liquide caloporteur traversant le reste de la boucle par rapport à celui du liquide caloporteur traversant un radiateur à haute température (34).

14. Système de gestion thermique, notamment pour le refroidissement moteur et/ou la climatisation d'un véhicule automobile, comportant :
- un circuit de refroidissement moteur dans lequel circule un liquide caloporteur, et
- un circuit de climatisation dans lequel circule un fluide réfrigérant, ledit circuit comportant au moins un refroidisseur de gaz (14),
le refroidisseur de gaz (14) comprenant au moins deux étages successifs, chaque étage permettant un échange thermique entre le liquide caloporteur et le fluide réfrigérant, système **caractérisé en ce qu'**il comprend en outre ;
- des moyens de régulation (50 ; 52 ; 54 ; 56) aptes à réduire et/ou interrompre sélectivement la circulation du liquide caloporteur dans le premier et/ou le deuxième étage, de manière à accroître corrélativement la quantité de chaleur cédée par le fluide réfrigérant au liquide caloporteur circulant dans l'autre étage.
